# EUROPÄISCHE PATENTSCHRIFT

(11) **EP 3 293 546 B1**
(45) Veröffentlichungstag und Bekanntmachung des Hinweises auf die Patenterteilung: **07.11.2018**
(21) Anmeldenummer: 17185394.8
(22) Anmeldetag: 08.08.2017
(51) Int. Cl.: G01S 17/42, G01S 7/481

(54) **OPTOELEKTRONISCHER SENSOR UND VERFAHREN ZUM ABSTÜTZEN EINER HAUBE EINES SENSORS**
OPTOELECTRONIC SENSOR AND METHOD FOR SUPPORTING A HOOD OF A SENSOR
CAPTEUR OPTOÉLECTRONIQUE ET PROCÉDÉ DE SUPPORT D'UN CAPOT DE CAPTEUR

(30) Priorität: 12.09.2016 DE 102016117093
(43) Veröffentlichungstag der Anmeldung: 14.03.2018
(73) Patentinhaber: Sick AG, 79183 Waldkirch (DE)
(72) Erfinder: Baumgartner, August, 79100 Freiburg (DE); Nübling, Ralf Ulrich, 79211 Denzlingen (DE)

(56) Entgegenhaltungen:
- EP-A1- 2 388 619
- DE-A1- 19 928 958
- DE-A1-102010 060 876
- US-A- 5 808 727

## Beschreibung

Die Erfindung betrifft einen optoelektronischen Sensor zur Erfassung von Objekten in einem Überwachungsbereich sowie ein Verfahren zum Abstützen einer Haube, die Teil eines Gehäuses eines Sensors ist, nach dem Oberbegriff von Anspruch 1 beziehungsweise 12.

Für Abstandsmessungen, die einen großen horizontalen Winkelbereich des Messsystems erforderlich machen, eignen sich optoelektronische Systeme und besonders Laserscanner. In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder durch mehrere Abtastungen desselben Objekts an verschiedenen Stellen dessen Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Neben solchen Messanwendungen werden Laserscanner auch in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Die Abtastung der Überwachungsebene in einem Laserscanner wird üblicherweise dadurch erreicht, dass der Sendestrahl auf einen rotierenden Drehspiegel trifft. Lichtsender, Lichtempfänger sowie zugehörige Elektronik und Optik sind dabei im Gerät fest montiert und vollziehen die Drehbewegung nicht mit. Es ist aber auch bekannt, den Drehspiegel durch eine mitbewegte Abtasteinheit zu ersetzen. Beispielsweise rotiert in der DE 197 57 849 B4 der gesamte Messkopf mit Lichtsender und Lichtempfänger. Die EP 2 388 619 A1 sieht ebenfalls eine drehbare Sende-/Empfangseinheit vor. Diese Abtasteinheit wird beispielsweise nach dem Transformationsprinzip von den drehfesten Bereichen des Sensors mit Energie versorgt.

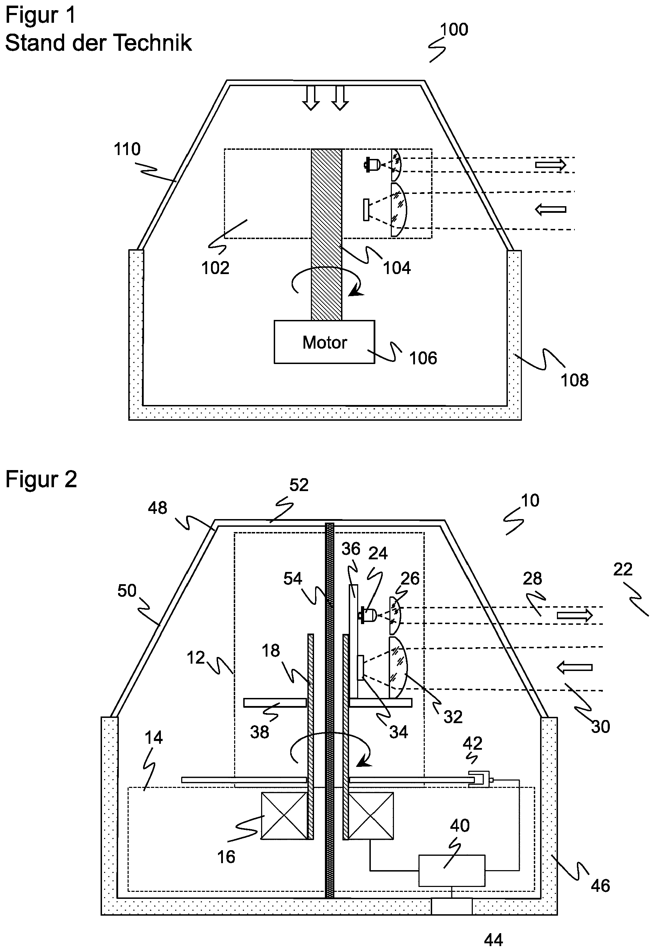

US 5 808 727 A offenbart einen optoelektronischen Sensor mit einem Antrieb, der eine Hohlwelle aufweist. Figur 1 zeigt eine schematische Schnittansicht eines herkömmlichen Laserscanners 100 mit einer derartigen drehbaren Abtasteinheit 102. Die Drehbewegung wird dadurch erzeugt, dass die Abtasteinheit 102 auf einer Welle 104 eines Antriebs 106 sitzt. Auf den Aufbau des Laserscanners 100, der grundsätzlich den einleitenden Erläuterungen entspricht, kommt es an dieser Stelle nicht an.

Der Laserscanner 100 ist von einem Gehäuse 108 geschützt, das im oberen Teil von einer Haube 110 gebildet wird. Diese Haube 110 ist einstückig und aus Kunststoff hergestellt. Besonders bei großen Abmessungen des Laserscanners 100 und damit auch der Haube 110 kommt es konstruktionsbedingt zu einer Instabilität in der Haubenmitte, die sich dort ähnlich verhält wie eine Lautsprechermembran, wie dies durch zwei Pfeile angedeutet ist. Es reichen kleine Krafteinwirkungen aus, um eine Kollision beziehungsweise ein Schleifen der Haube 106 mit rotierenden Teilen wie Elektronikkarten oder sonstigen Bauteilen der Abtasteinheit oder der Welle 104 selbst herbeizuführen. Dies kann Störungen sogar bis hin zu einem Geräteausfall verursachen.

Die Haube 110 kann jedoch nicht als Gegenmaßnahme auf der Welle 104 abgestützt werden, da der Antrieb 106 mit Umdrehungsfrequenzen in der Größenordnung von 50Hz drehen kann. Prinzipiell ist denkbar, die Haube 110 drehbar zu lagern. Das ist aber aufwändig, und es ist sehr schwer, unter Toleranzkriterien eine stabile Abstützung und eine rundlaufende Drehbewegung zu erreichen. Beispielsweise die DE 199 275 02 A1 oder der DE 199 289 58 A1 sehen dennoch eine solche Abstützung vor, wobei dort die Bauform sehr speziell ist und das Problem des Aufwands und der Toleranzen auch nicht angesprochen oder gelöst wird.

Da außerdem die Haube 110 ein optisches Bauteil ist, kann man nicht einfach Versteifungsrippen, Stützstege oder dergleichen im Inneren der Haube 110 anbringen. Das würde im Herstellungsprozess Fehlstellen wie Fließfronten oder Einfallstellen und damit eine Beeinträchtigung der Messung verursachen beziehungsweise den Abtastbereich einschränken.

Neben der geschilderten Durchbiegung besonders bei punktueller Belastung nahe des Zentrums der Haubenmitte ist ein weiterer Nachteil der Haube 110 die geringe Wärmedurchlässigkeit. des Kunststoffs, weshalb die im Inneren des Laserscanners 100 erzeugte Wärme unzureichend über die Haube 110 nach außen abgeleitet wird und so eine Überhitzung des Geräts möglich ist. Die nichtleitende Kunststoffhaube kann zudem nicht elektronisch an Masse angebunden werden und bietet somit ein großes Einfallstor für EMV-Störungen (elektromagnetische Verträglichkeit).

Es ist denkbar, die Haube 110 nicht als ein einziges Bauteil, sondern als Baugruppe aus einer umlaufenden Frontscheibe und einem Deckel auszuführen. Damit lässt sich eine größere Stabilität erzielen, dafür steigen die Herstellkosten, und an der Verbindung von Frontscheibe und Deckel ergeben sich Dichtigkeitsprobleme. Außerdem löst auch das nicht das Problem der Wärmeabfuhr und der fehlenden elektronischen Anbindung an Masse und damit schlechten Abschirmwirkung gegen EMV-Einstrahlung.

Daher ist Aufgabe der Erfindung, einen gattungsgemäßen Sensor mit verbesserter Stabilität anzugeben.

Diese Aufgabe wird durch einen optoelektronischen Sensor zur Erfassung von Objekten in einem Überwachungsbereich sowie ein Verfahren zum Abstützen einer Haube, die Teil eines Gehäuses eines Sensors ist, nach Anspruch 1 beziehungsweise 12 gelöst. Der Sensor weist einen Lichtsender und einen Lichtempfänger auf, um den Überwachungsbereich abzutasten, wobei ein Antrieb und eine davon bewegte Abtasteinheit für eine periodische Abtastbewegung sorgen. Der Sensor weist ein Gehäuse mit einer Haube auf, die den oberen Teil des Gehäuses bildet. Diese Haube ist vorzugsweise in sich schon stabil, aber gerade bei großem Durchmesser der Haube genügt die Abstützung durch die eigene Festigkeit nicht überall, weshalb sie zusätzlich durch ein Stützelement abgestützt ist. Die Erfindung geht nun von dem Grundgedanken aus, das Stützelement in einer Hohlwelle des Antriebs unterzubringen.

Die Erfindung hat den Vorteil, dass die Haube mit einer einfachen Maßnahme ausreichend gestützt ist, um Kollisionen der Haube mit beweglichen Teilen, wie der Abtasteinheit oder der Hohlwelle, zuverlässig zu vermeiden. Zugleich wird die Haube und damit der ganze Sensor im Feld robuster, hat eine höhere Schock- und Schwing-Festigkeit, und besonders die Outdoorfähigkeit oder die Einsatzmöglichkeiten in anspruchsvollen Umgebungen, in denen der Sensor nicht vor mechanischen Belastungen geschützt werden kann, erhöht sich somit erheblich. Ein Ausfall durch eine defekte Haube oder ein defektes Gerät wird wesentlich unwahrscheinlicher.

Die Haube ist bevorzugt als Rotationskörper mit einer Seitenwand und einem Deckelbereich ausgebildet. Die Seitenwand bildet beispielsweise einen Kreiszylinder, einen Kegelstumpf oder einen Kugelabschnitt, es sind aber auch kompliziertere Konturen beispielsweise wie bei einem Kelch denkbar. Nach oben hin wird dies dann durch einen Deckelbereich abgeschlossen, der kreisförmig sein, aber auch eine Wölbung aufweisen kann.

Die Haube weist bevorzugt eine Frontscheibe als Austrittsbereich für das Sendelicht und Eintrittsbereich für das remittierte Licht auf. Diese Frontscheibe ist nochmals bevorzugt integraler Bestandteil der Haube, insbesondere der Seitenwand.

Die Haube ist bevorzugt aus für das Sendelicht transparentem Kunststoff hergestellt. Die Transparenzeigenschaft gilt damit natürlich auch für das remittierte Empfangslicht, da es dieselbe Wellenlänge aufweist. Damit gewinnt die Haube die Eigenschaften, um zugleich als Frontscheide zu dienen. Für das bloße Auge muss allerdings die Haube keineswegs transparent sein, sondern ist beispielsweise schwarz und undurchsichtig, da für das Sendelicht häufig ein Spektralbereich außerhalb des sichtbaren Bereichs genutzt wird, insbesondere Infrarotlicht.

Die Haube ist vorzugsweise ein einziges Bauteil, keine Baugruppe aus mehreren Elementen, um die Herstellung der Haube und deren Handhabung während der Montage des Sensors zu vereinfachen.

Bevorzugt stützt das Stützelement die Haube zentral ab. Der Abstützbereich an der Haube befindet sich dabei insbesondere etwa in der Mitte des Deckelbereichs.

Das Stützelement ist bevorzugt an der Haube fixiert. Durch die Führung in der Hohlwelle ist ein Mitdrehen des Stützelements nicht erforderlich, es kann vielmehr mit dem ruhenden Sensor fest verbunden sein. Dementsprechend ist auch eine einfache und stabile Fixierung an der Haube ohne drehbare Lagerung oder dergleichen möglich.

Das Stützelement ist bevorzugt stangenförmig ausgebildet. Ein derartiges Stützelement ist stangenförmig oder eine Art Stützstift. Das ermöglicht eine einfache Ausgestaltung des Stützelements und Führung durch die Hohlwelle. Die praktisch punktförmige Abstützung genügt häufig schon, um das Problem einer instabilen Haube zu lösen. Außerdem ist es möglich, den Haubenbereich um den Abstützpunkt zu verstärken und so die Kräfte im Deckelbereich der Haube zu verteilen.

Das Stützelement ist bevorzugt an einem Boden des Gehäuses abgestützt. Dort können die Stützkräfte leicht aufgenommen werden. Vorzugsweise läuft das Stützelement auf diese Weise einmal über die ganze Höhe des Sensors von Boden bis Deckelbereich der Haube.

Das Stützelement ist bevorzugt leitend. Dazu kann es aus Metall hergestellt sein oder einen Leiter aufweisen, auch in Form einer leitenden Beschichtung. Die leitenden Eigenschaften sollen in erster Linie dazu dienen, Bereiche des Sensors auf Masse zu legen, um die EMV-Festigkeit zu unterstützen. Denkbar ist auch eine verbesserte Wärmeverteilung oder Wärmeabgabe. Auch eine Strom- oder Signalleitung ist denkbar, beispielsweise indem ein drahtloser Energie- oder Datenaustausch zwischen einer rotierenden Abtasteinheit zum Deckelbereich der Haube hin vorgesehen ist und dann das Stützelement die weitere Verbindung in den Bodenbereich des Sensors herstellt.

Die Haube weist bevorzugt einen leitenden Teilbereich auf. Dieser leitende Teilbereich befindet sich vorzugsweise im Deckelbereich oder bildet den Deckelbereich und schließt nochmals bevorzugt den Kontaktbereich mit dem Stützelement ein. Der leitende Teilbereich ist beispielsweise aus Metall hergestellt, weist eine Metallplatte auf oder ist leitend beschichtet. Bei einer herkömmlichen Haube würde das Zusatzgewicht für die leitenden Eigenschaften die Probleme mit den Instabilitäten noch verschärfen, aber bei geeigneter Auslegung des Stützelements ist das erfindungsgemäß ohne weiteres möglich. Der leitende Teilbereich dient als elektrische Abschirmung und zur Wärmeabfuhr an die Umgebung. Damit werden die EMV-Eigenschaften verbessert, und der Sensor kann in einem erweiterten Temperaturbereich eingesetzt werden. Vorzugsweise ist der leitende Teilbereich auf Masse gelegt, insbesondere über ein ebenfalls leitendes Stützelement.

Die Abtasteinheit weist bevorzugt den Lichtsender und/oder den Lichtempfänger auf. Damit wird die Abtasteinheit zu einem rotierenden Messkopf. Mit Lichtsender und Lichtempfänger sind vorzugsweise auch zugehörige Sende- und Empfangsoptiken sowie zumindest ein Teil der Sende- und Empfangselektronik sowie möglicherweise der Auswertungseinheit in der Abtasteinheit untergebracht.

Der Sensor ist bevorzugt ein entfernungsmessender Sensor, indem die Auswertungseinheit die Lichtlaufzeit zwischen Aussenden des Lichtsignals und Empfang des remittierten Lichts und daraus die Entfernung eines Objekts bestimmt. Damit können wesentlich genauere Objektinformationen gewonnen werden als durch bloße Feststellung der Anwesenheit von Objekten.

Vorzugsweise ist eine Winkelmesseinheit zur Erfassung der Winkelstellung der Abtasteinheit vorgesehen. Insgesamt stehen dann für erfasste Objekte vollständige zweidimensionale Positionskoordinaten zur Verfügung. Im Falle eines räumlich ausgedehnten Überwachungsbereichs durch Bewegung der Abtasteinheit in zwei Achsen wird vorzugsweise auch der jeweilige Kippwinkel der Abtasteinheit erfasst, so dass dann insgesamt dreidimensionale Kugelkoordinaten erhalten werden, welche die Objektposition innerhalb des Überwachungsbereichs ebenfalls vollständig beschreiben.

Der Sensor ist bevorzugt als Sicherheitssensor ausgebildet und weist einen Sicherheitsausgang auf, wobei die Auswertungseinheit dafür ausgebildet ist zu bestimmen, ob sich ein Objekt in einem Schutzfeld innerhalb des Überwachungsbereichs befindet, um daraufhin ein sicherheitsgerichtetes Abschaltsignal über den Sicherheitsausgang auszugeben. Ein Sicherheitssensor ist sicher im Sinne einer Sicherheitsnorm wie einleitend beschrieben und kann deshalb insbesondere zum Personenschutz an Gefahrenquellen eingesetzt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines herkömmlichen Laserscanners zur Verdeutlichung der Problemstellung;
- Fig. 2: eine schematische Schnittdarstellung einer Ausführungsform eines erfindungsgemäßen Laserscanners mit durch eine Hohlwelle eines Antriebs abgestützter Haube;
- Fig. 3: eine vereinfachte Schnittdarstellung einer weiteren Ausführungsform eines erfindungsgemäßen Laserscanners ähnlich Figur 2, jedoch mit zusätzlichem leitenden Teilbereich der Haube im Bereich der Abstützung.

Fig. 2 zeigt eine schematische Schnittdarstellung durch einen erfindungsgemäßen optoelektronischen Sensor in einer Ausführungsform als Laserscanner 10. Der Laserscanner 10 umfasst in grober Aufteilung eine bewegliche Abtasteinheit 12 und eine Sockeleinheit 14. Die Abtasteinheit 12 ist der optische Messkopf, während in der Sokkeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14, der als Hohlwellenantrieb mit einer Hohlwelle 18 ausgestaltet ist, die Abtasteinheit 12 in eine Schwing- oder Drehbewegung versetzt, um so einen Überwachungsbereich 22 periodisch abzutasten.

In der Abtasteinheit 12 erzeugt ein Lichtsender 24 mit Hilfe einer Sendeoptik 26 Sendelicht 28, das in den Überwachungsbereich 22 ausgesandt wird. Trifft das Sendelicht 28 in dem Überwachungsbereich 22 auf ein Objekt, so kehrt entsprechendes remittiertes Licht 30 zu dem Laserscanner 10 zurück. Das remittierte Licht 30 wird von einer Empfangsoptik 32 auf einen Lichtempfänger 34 geführt und dort in ein elektrisches Empfangssignal gewandelt. Lichtsender 24 und Lichtempfänger 34 sind hier gemeinsam auf einer ersten Leiterkarte 36 untergebracht, die in vertikaler Ausrichtung an der Hohlwelle 18 angebracht ist. Eine um horizontal um die Hohlwelle 18 angeordnete zweite Leiterkarte 38 ist mit der ersten Leiterkarte 36 verbunden und stützt sie zusätzlich ab.

Die Anordnung in der Abtasteinheit 12 ist rein beispielhaft zu verstehen. So können Lichtsender 24 und Lichtempfänger 34 auch jeweils auf einer eigenen Leiterkarte untergebracht sein und insgesamt mehr oder weniger Leiterkarten in anderer Anordnung vorgesehen sein. Prinzipiell ist jede andere an sich von einstrahligen optoelektronischen Sensoren oder Laserscannern bekannte Anordnung wie etwa eine Doppellinse mit Sendeoptik im Zentrum einer Empfangslinse oder die Verwendung eines Strahlteilerspiegels möglich. Es ist nicht einmal zwingend erforderlich, das ein tastendes System aus Lichtsender 24 und Lichtempfänger 34 aufgebaut wird, stattdessen kann auch ein anderer Sensor oder eine Kombination mehrerer Sensoren rotieren, etwa um eine Mehrfachabtastung in mehreren Ebenen zu erreichen, wie dies etwa in der DE 10 2013 111 547 A1 beschrieben ist. Die Abtasteinheit 12 kann auch als eine Anordnung eines ruhenden Lichtsenders und Lichtempfängers mit einem Dreh- oder Schwingspiegel ausgebildet sein.

In der Sockeleinheit 14 ist eine Auswertungseinheit 40 vorgesehen, die das Empfangssignal auswertet, den Antrieb 16 steuert und das Signal einer Winkelmesseinheit 42, erhält, welche die jeweilige Winkelstellung der Abtasteinheit 12 bestimmt. Die Auswertungseinheit 40 steht auf eine nicht dargestellte Weise in Kommunikationsverbindung mit der Abtasteinheit 12 beziehungsweise den Leiterkarten 36, 38, beispielsweise durch eine drahtlose Datenübertragungseinheit vorzugsweise auch mit drahtloser Versorgung für die Elemente der Abtasteinheit 12. Die Steuer- und Auswertungsfunktionalität kann weitgehend frei zwischen der Abtasteinheit 12, insbesondere den Leiterkarten 36, 38, und der Auswertungseinheit 40 verteilt sein, wird aber so beschrieben, als sei allein die Auswertungseinheit 40 dafür zuständig.

Zur Auswertung wird vorzugsweise mit einem Lichtlaufzeitverfahren die Distanz zu einem angetasteten Objekt gemessen. Dazu wird in einem phasenbasierten System das Sendelicht des Lichtsenders 24 moduliert und eine Phasenbeziehung zu dem Empfangssignal des Lichtempfängers 34 ausgewertet. Alternativ werden in einem pulsbasierten System kurze Lichtpulse zu einem Sendezeitpunkt ausgesandt und aus dem Empfangssignal deren Empfangszeitpunkt ermittelt. Dabei sind sowohl Einzelpulsverfahren, die jeweils aus einem einzigen Sendepuls eine Entfernung bestimmen, als auch Pulsmittelungsverfahren denkbar, in denen das Empfangssignal nach einer Vielzahl aufeinanderfolgender Sendepulse gesammelt und statistisch ausgewertet wird. Die jeweilige Winkelstellung, unter welcher das Sendelicht 28 jeweils ausgesandt wurde, ist von der Winkelmesseinheit 42 ebenfalls bekannt. Somit stehen nach jeder Scanperiode, also Umdrehung der Abtasteinheit 12, über den Winkel und die Entfernung zweidimensionale Polarkoordinaten aller Objektpunkte in einer Abtastebene zur Verfügung.

Damit sind die Objektpositionen beziehungsweise Objektkonturen bekannt und können über eine Sensorschnittstelle 44 ausgegeben werden. Die Sensorschnittstelle 44 oder ein weiterer, nicht gezeigter Anschluss dienen umgekehrt als Parametrierschnittstelle. Bei Anwendungen in der Sicherheitstechnik werden Schutzfelder, die in dem Überwachungsbereich 22 konfiguriert werden können, auf unzulässige Eingriffe überwacht, und daraufhin wird gegebenenfalls ein sicherheitsgerichtetes Abschaltsignal über die dann sicher ausgebildete Schnittstelle 44 (z.B. OSSD, Output Signal Switching Device) ausgegeben.

Der Laserscanner 10 ist in einem Gehäuse 46 untergebracht, dessen oberer Teil durch eine Haube 48 gebildet ist. Die Haube 48 weist eine Seitenwand 50 auf, hier in Form eines Kegelstumpfes, allgemein als Rotationskörper aus einer geeigneten Kontur. Die Seitenwand 50 dient als Frontscheibe, durch die das Sendelicht 28 aus- beziehungsweise das remittierte Licht 30 eintritt. Dementsprechend ist sie aus einem Material hergestellt, das für das von dem Lichtsender 24 erzeugte Sendelicht 28 transparent ist.

Die Haube 48 wird nach oben hin durch einen Deckelbereich 52 abgeschlossen, der mit der Seitenwand 50 verbunden und vorzugsweise damit gemeinsam ausgebildet ist. Beispielsweise ist die Haube 48 ein einziges Kunststoffbauteil.

Die Haube 48 wird im Deckelbereich 52, in dieser Ausführungsform zentral, durch ein Stützelement 54 abgestützt. Das Stützelement 54 kann eine einfache Form haben, etwa als Stift oder Stange ausgebildet sein. Die Verbindung zwischen Haube 48 und Stützelement 54 ist vorzugsweise fix. Eine drehbare Lagerung ist dabei nicht vorgesehen und auch nicht erforderlich, weil das Stützelement 54 die Bewegung der Abtasteinheit 12 nicht mitvollzieht. Das Stützelement 54 verläuft vielmehr durch die Hohlwelle 18 des Antriebs 16 bis zum Boden des Gehäuses 46. Damit ist die Haube 48 und insbesondere deren Deckelbereich 52 stabil auf dem Boden abgestützt und somit fixiert. Eine Kollision mit Elementen der sich bewegenden, meist rasch drehenden Abtasteinheit 12 ist nicht mehr möglich.

Das Stützelement 54 kann außer der erläuterten konstruktiv-mechanischen Funktion auch noch zu verbesserten thermischen und EMV-Eigenschaften beitragen. Dazu wird das Stützelement 54 leitend insbesondere aus Metall ausgebildet. Dadurch kann die Haube 48 in ihrem Deckelbereich 52 ohne bewegliche Übergänge elektronisch und thermisch angebunden werden. Das Stützelement 54 kann sogar zur Versorgung der Abtasteinheit 12 beziehungsweise zum Datenaustausch mit der Abtasteinheit 12 beitragen. Dazu wird der ruhende Teil einer entsprechenden drahtlosen Verbindung zwischen Abtasteinheit 12 und Sockeleinheit 14 im Deckelbereich 52 angeordnet und das Stützelement 54 dafür genutzt, eine Verbindung zum unteren Bereich des Laserscanners 10 herzustellen.

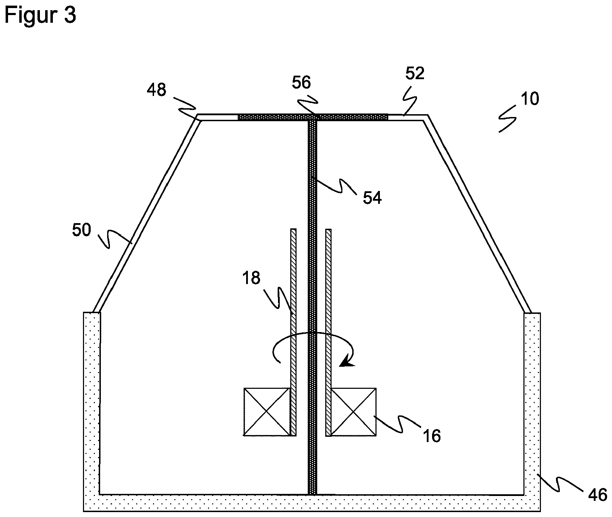

Figur 3 zeigt eine Schnittdarstellung einer weiteren Ausführungsform eines erfindungsgemäßen Laserscanners 10. Die Darstellung ist deutlich vereinfacht, auch dieser Laserscanner 10 umfasst die hier weggelassenen, jedoch für den Betrieb erforderlichen und bereits zu Figur 2 erläuterten Merkmale. Zusätzlich ist hier im Deckelbereich 52 der Haube 48 ein leitender Teilbereich 56 vorgesehen, der als Abschirmung und thermische Abstrahlfläche dient. Der Kontaktbereich mit dem Stützelement 54 liegt im leitenden Teilbereich 56. Der leitende Teilbereich 56 kann über das Stützelement 54 mit Masse verbunden werden. Die EMV-Eigenschaften und die thermischen Eigenschaften der Haube 48 werden auf diese Weise erheblich verbessert.

Prinzipiell ist es möglich, die Haube 48 über eine drehbare Lagerung, wie ein Kugellager, direkt auf der Hohlwelle 18 abzustützen, die dann selbst als Stützelement 54 dient. Damit würde aber ein Vorteil eines in der Hohlwelle 18 geführten und deshalb ruhenden Stützelements 54 aufgegeben. Die Abstützung auf einer Welle mit einer Lagerung wäre bereits für eine einfache Welle anstelle einer Hohlwelle möglich. Ein ähnlicher Gedankengang ist, an der Haube 48 einen Gleiteinsatz beispielsweise aus Teflon oder eine in die Haube 48 eingepresste Struktur vorzusehen, um bei einer Kollision zwischen Haube 48 und bewegten Elementen der Abtasteinheit 12 Schäden zu minimieren oder zu verhindern.

## Patentansprüche

1. Optoelektronischer Sensor (10), insbesondere Laserscanner, zur Erfassung von Objekten in einem Überwachungsbereich (22), wobei der Sensor (10) einen Lichtsender (24) zum Aussenden von Sendelicht (28), einen Antrieb (16), eine mit Hilfe des Antriebs (16) bewegbare Abtasteinheit (12) zur periodischen Abtastung mit dem Sendelicht (28), einen Lichtempfänger (34) zum Erzeugen eines Empfangssignals aus von Objekten in dem Überwachungsbereich (22) remittierten Licht (30), eine Auswertungseinheit (40) zur Erfassung von Informationen über Objekte in dem Überwachungsbereich (22) anhand des Empfangssignals und ein Gehäuse (46) mit einer Haube (48) aufweist, wobei die Haube (48) durch ein Stützelement (54) zusätzlich abgestützt ist und wobei der Antrieb (16) eine Hohlwelle (18) aufweist, **dadurch gekennzeichnet,**
**dass** das Stützelement (54) durch die Hohlwelle (18) geführt ist.

2. Sensor (10) nach Anspruch 1,
wobei die Haube (48) als Rotationskörper mit einer Seitenwand (50) und einem Deckelbereich (52) ausgebildet ist.

3. Sensor (10) nach Anspruch 1 oder 2,
wobei die Haube (48) eine Frontscheibe (50) als Austrittsbereich für das Sendelicht (28) und Eintrittsbereich für das remittierte Licht (30) aufweist.

4. Sensor (10) nach einem der vorhergehenden Ansprüche,
wobei die Haube (48) aus für das Sendelicht (28) transparentem Kunststoff hergestellt ist.

5. Sensor (10) nach einem der vorhergehenden Ansprüche,
wobei das Stützelement (54) die Haube (48) zentral abstützt.

6. Sensor (10) nach einem der vorhergehenden Ansprüche,
wobei das Stützelement (54) an der Haube (48) fixiert ist.

7. Sensor (10) nach einem der vorhergehenden Ansprüche,
wobei das Stützelement (54) stangenförmig ausgebildet ist.

8. Sensor (10) nach einem der vorhergehenden Ansprüche,
wobei das Stützelement (54) an einem Boden des Gehäuses (46) abgestützt ist.

9. Sensor (10) nach einem der vorhergehenden Ansprüche,
wobei das Stützelement (54) leitend ist.

10. Sensor (10) nach einem der vorhergehenden Ansprüche,
wobei die Haube (48) einen leitenden Teilbereich (56) aufweist.

11. Sensor (10) nach einem der vorhergehenden Ansprüche,
wobei die Abtasteinheit (12) den Lichtsender (24) und/oder den Lichtempfänger (34) aufweist.

12. Verfahren zum Abstützen einer Haube (48), die Teil eines Gehäuses (46) eines Sensors (10) ist, insbesondere eines Sensors (10) nach einem der vorhergehenden Ansprüche, wobei der Sensor (10) einen Antrieb (16) und eine von dem Antrieb (16) zum periodischen Abtasten eines Überwachungsbereichs (22) mit Sendelicht (28) in Bewegung versetzte Abtasteinheit (12) aufweist und wobei die Haube (48) durch ein Stützelement (54) abgestützt ist,
**dadurch gekennzeichnet,**
**dass** das Stützelement (54) durch eine Hohlwelle (18) des Antriebs (16) geführt wird.

## Claims

1. An optoelectronic sensor (10), in particular a laser scanner, for detecting objects in a monitoring area (22), the sensor (10) comprising a light transmitter (24) for transmitting transmitted light (28), a drive (16), a scanning unit (12) movable by means of the drive (16) for periodic scanning with the transmitted light (28), a light receiver (34) for generating a reception signal from remitted light (30) remitted by objects in the monitoring area (22), an evaluation unit (40) for detecting information about objects in the monitoring area (22) using the reception signal, and a housing (46) having a cover (48), wherein the cover (48) is additionally supported by a support element (54) and wherein the drive (16) has a hollow shaft (18),
**characterized in that** the support element (54) is guided through the hollow shaft (18).

2. The sensor (10) according to claim 1,
wherein the cover (48) is formed as a body of revolution with a side wall (50) and a cover region (52).

3. The sensor (10) according to claim 1 or 2,
wherein the cover (48) has a front screen (50) as an exit region for the transmitted light (28) and an entry region for the remitted light (30).

4. The sensor (10) according to one of the preceding claims,
wherein the cover (48) is made of plastic transparent for the transmitting light (28).

5. The sensor (10) according to one of the preceding claims,
wherein the support element (54) centrally supports the cover (48).

6. The sensor (10) according to one of the preceding claims,
wherein the support element (54) is fixed to the cover (48).

7. The sensor (10) according to any of the preceding claims,
wherein the support element (54) is bar-shaped.

8. The sensor (10) according to one of the preceding claims,
wherein the support element (54) is supported on a bottom of the housing (46).

9. The sensor (10) according to one of the preceding claims,
wherein the support element (54) is conductive.

10. The sensor (10) according to one of the preceding claims,
wherein the cover (48) has a conductive portion (56).

11. The sensor (10) according to one of the preceding claims,
wherein the scanning unit (12) comprises the light transmitter (24) and/or the light receiver (34).

12. A method for supporting a cover (48) which is part of a housing (46) of a sensor (10), in particular a sensor (10) according to one of the previous claims, wherein the sensor (10) has a drive (16) and a scanning unit (12) set in motion by the drive (16) for periodically scanning a monitoring area (22) with transmitted light (28), and wherein the cover (48) is supported by a support element (54),
**characterized in that** the support element (54) is guided through a hollow shaft (18) of the drive (16).

## Revendications

1. Capteur optoélectronique (10), en particulier scanneur laser, pour détecter des objets dans une zone à surveiller (22), le capteur (10) comportant un émetteur de lumière (24) pour émettre une lumière d'émission (28), un entraînement (16), une unité de balayage (12) mobile à l'aide de l'entraînement (16) pour le balayage périodique avec la lumière d'émission (28), un récepteur de lumière (34) pour générer un signal de réception à partir d'une lumière (30) réémise par des objets dans la zone à surveiller (22), une unité d'évaluation (40) pour acquérir des informations sur des objets dans la zone à surveiller (22) à l'aide du signal de réception, et un boîtier (46) pourvu d'un capot (48), le capot (48) étant soutenu en supplément par un élément de soutien (54) et l'entraînement (16) comprenant un arbre creux (18),
**caractérisé en ce que**
l'élément de soutien (54) est mené à travers l'arbre creux (18).

2. Capteur (10) selon la revendication 1,
dans lequel le capot (48) est réalisé sous forme de corps de rotation pourvu d'une paroi latérale (50) et d'une zone formant couvercle (52).

3. Capteur (10) selon la revendication 1 ou 2,
dans lequel le capot (48) comprend une vitre frontale (50) à titre de zone de sortie pour la lumière d'émission (28) et à titre de zone d'entrée pour la lumière réémise (30).

4. Capteur (10) selon l'une des revendications précédentes,
dans lequel le capot (48) est réalisé en matière plastique qui est transparente pour la lumière d'émission (28).

5. Capteur (10) selon l'une des revendications précédentes,
dans lequel l'élément de soutien (54) soutient le capot (48) au centre.

6. Capteur (10) selon l'une des revendications précédentes,
dans lequel l'élément de soutien (54) est fixé au capot (48).

7. Capteur (10) selon l'une des revendications précédentes,
dans lequel l'élément de soutien (54) est réalisé en forme de barreau.

8. Capteur (10) selon l'une des revendications précédentes,
dans lequel l'élément de soutien (54) est appuyé contre un fond du boîtier (46).

9. Capteur (10) selon l'une des revendications précédentes,
dans lequel l'élément de soutien (54) est conducteur.

10. Capteur (10) selon l'une des revendications précédentes,
dans lequel le capot (48) présente une zone partielle conductrice (56).

11. Capteur (10) selon l'une des revendications précédentes,
dans lequel l'unité de balayage (12) comprend l'émetteur de lumière (24) et/ou le récepteur de lumière (34).

12. Procédé pour soutenir un capot (48) qui fait partie d'un boîtier (46) d'un capteur (10), en particulier d'un capteur (10) selon l'une des revendications précédentes, le capteur (10) comportant un entraînement (16) et une unité de balayage (12) mis en mouvement par l'entraînement (16) pour le balayage périodique d'une zone à surveiller (22) avec la lumière d'émission (28), et le capot (48) étant soutenu par un élément de soutien (54),
**caractérisé en ce que**
l'élément de soutien (54) est mené à travers un arbre creux (18) de l'entraînement (16).
